# EUROPÄISCHE PATENTSCHRIFT

(11) **EP 1 050 999 B1**
(45) Veröffentlichungstag und Bekanntmachung des Hinweises auf die Patenterteilung: **18.04.2007**
(21) Anmeldenummer: 99109098.6
(22) Anmeldetag: 07.05.1999
(51) Int. Cl.: H04L 12/40, H04L 29/14, B60R 16/02

(54) **Datenübertragungssystem, insbesondere in einem Kraftfahrzeug, und Datenübertragungsverfahren**
System and method for data transmission in particular in a motor vehicle
Système et procédé de transmission de données notamment dans un vehicule automobile

(43) Veröffentlichungstag der Anmeldung: 08.11.2000
(73) Patentinhaber: SIEMENS AKTIENGESELLSCHAFT, 80333 München (DE)
(72) Erfinder: Zelger, Christian, 93049 Regensburg (DE); Swart, Marten, 93083 Obertraubling (DE)

(56) Entgegenhaltungen:
- EP-A- 0 725 513
- WO-A-92/17017
- "BUS CONTENTION AND OVERLOAD DETECTING TRANSMITTER" IBM TECHNICAL DISCLOSURE BULLETIN,US,IBM CORP. NEW YORK, Bd. 34, Nr. 8, Seite 10-13 XP000302029 ISSN: 0018-8689

## Beschreibung

Die Erfindung betrifft ein Datenübertragungssystem mit zwei oder mehr Datenverarbeitungseinheiten, die über einen zwei Leitungen aufweisenden Bus miteinander verbunden sind. Weiterhin ist die Erfindung auf ein Datenübertragungsverfahren gerichtet.

Aus der DE 196 22 685 A1 ist ein in einem Insassenschutzsystem eines Kraftfahrzeugs eingesetztes Datenübertragungssystem bekannt, bei dem ein Steuergerät über einen zwei Leitungen aufweisenden Bus mit einer Zündtreiberschaltung verbunden ist. Zwischen den beiden Busleitungen liegt eine Gleichspannung zur Spannungsversorgung der Zündtreiberschaltung an, der das durch Amplitudenmodulation übertragene Datensignal aufmoduliert ist.

Allgemein sind solche Datenübertragungssysteme kurzschlußgefährdet, da die Datenübertragung nicht mehr zuverlässig gewährleistet werden kann, wenn eine der Busleitungen fehlerhaft mit einer auf festem Potential liegenden Komponente in leitenden Kontakt gelangen sollte, beispielsweise mit Massepotential, Bordspannung oder einem anderen festen Potential. Eine derartige leitende Kontaktierung kann sich aufgrund von Vibrationen, wie sie beispielsweise im Kraftfahrzeug stark auftreten, Durchscheuerung oder Fehlerhaftigkeit der Isolation usw. ergeben. In diesem Fall kann nicht nur die Datenübertragung in sicherheitskritischer Weise beeinträchtigt sein, sondern eventuell auch der oder die Bustreiber aufgrund des hohen Kurzschlußstroms beschädigt werden, was eine nachfolgende Datenkommunikation nach Behebung oder Verschwinden des Kurzschlusses stören oder unmöglich machen kann. In diesem Fall muß dann auch der Treiber ausgetauscht werden.

Aus der WO 92/17017, die zur Bildung des Oberbegriffs der unabhängigen Ansprüche herangezogen wurde, ist eine Senderendstufe bekannt, bei der zwei Treiber jeweils eine Leitung eines Zweidrahtbusses mit einem Signal beaufschlagen. Um Rückwirkungen des Busses, wie Kurzschlüsse gegen eines der Versorgungspotentiale oder ein Kurzschluss zwischen den Leitungen, auf die Senderendstufe zu minimieren, sind die Treiber über geeignete Widerstände an die Leitungen angeschlossen, um eine Strombegrenzung im Kurzschlussfall zu bewerkstelligen.

Aus der EP 0 725 513 A1 ist eine fehlertolerante Endstufe für ein digitales Zweileiterbus-Datenkommunikationssystem bekannt, bei dem die Treiber für die beiden Leitungen über geeignet dimensionierte Widerstände an die Versorgungspotentiale angeschlossen sind, um im Falle des Kurzschusses gegen ein Versorgungspotential eine Strombegrenzung zu erzielen. Bei einem Kurzschluss der Leitungen untereinander wird ein Treiber abgeschaltet und die Leitung hochohmig abgeschlossen.

Der Erfindung liegt die Aufgabe zugrunde, ein Datenübertragungssystem zu schaffen, das verbesserte Kurzschlußfestigkeit besitzt.

Diese Aufgabe wird mit den in den Patentansprüchen 1, 4 und 6 genannten Merkmalen gelöst. Vorteilhafte Ausgestaltungen der Erfindung sind in Unteransprüchen angegeben.

Weiterhin wird mit der Erfindung ein Datenübertragungsverfahren gemäß den Patentansprüchen 10, 17 und 19 geschaffen.

Bei der Erfindung wird das Auftreten eines Kurzschlusses einer oder beider Busleitungen aktiv überprüft und bei Auftreten von Kurzschlußströmen oder -spannungen entsprechende Gegenmaßnahmen eingeleitet. Vorzugsweise werden nach Kurzschlußerfassung die Sollpotentiale der beiden Busleitungen umgeschaltet, so daß beispielsweise die bislang positives Potential führende Leitung nun auf Nullpotential oder niedriges Potential gelegt wird und die bislang auf Nullpotential oder niedrigem Potential liegende Leitung auf hohes Potential umgeschaltet wird. Wenn beispielsweise die bislang auf hohem Potential liegende Busleitung einen Kurzschluß gegen Masse oder einen niedrigen Potentialwert zeigt, kann durch die Umschaltung der Busleitungspotentiale erreicht werden, daß empfängerseitig im wesentlichen die gleiche Differenzspannung zwischen den Busleitungen empfangen wird und der auslegungsgemäße Amplitudenmodulationsgrad bei der Datenübertragung im wesentlichen beibehalten werden kann. Die bislang auf oder nahe bei Nullpotential liegende Busleitung nimmt nämlich nach dieser Polaritätsumschaltung hohes Potential an, so daß die Potentialdifferenz gegenüber der anderen, gegen Massepotential oder niedriges Potential kurzgeschlossenen Busleitung weitgehend gewährleistet bleibt. Diese Polaritätsumschaltung der beiden Busleitungen im Kurzschlußfall kann nicht nur die Beibehaltung sicherer Datenübertragung ermöglichen, sondern gegebenenfalls auch die Aufrechterhaltung kontinuierlicher Spannungsspeisung erlauben, sofern die Busleitungen nicht nur zur Datenübertragung, sondern auch zur Gleichstromspeisung der angeschlossenen Datenverarbeitungseinheiten dienen (siehe z.B. DE 196 22 685 A1).

Bei Erfassung eines Kurzschlusses kann gegebenenfalls auch der Treiber der kurzgeschlossenen Busleitung stillgesetzt werden, so daß eine Treiberüberlastung und -beschädigung durch zu hohe Kurzschlußströme vermieden wird.

Das erfindungsgemäße Datenübertragungssystem kann derart ausgelegt sein, daß im kurzschlußfreien Fall nur eine der Busleitungen einer Amplitudenmodulation zur Datenübertragung unterzogen wird, während die andere Busleitung auf konstantem Potential bleibt. Erst nach Auftreten eines Kurzschlusses der bislang amplitudenmodulierten Busleitung würde dann auf die andere Busleitung zur Amplitudenmodulation umgeschaltet. Vorzugsweise ist jedoch das Bustreibersystem symmetrisch ausgelegt und moduliert die Leitungssollspannungen von beispielsweise +10 V und 0 V synchron, so daß die beabsichtigte Modulationsamplitudenänderung auf beide Leitungen gleich aufgeteilt wird. Wenn die Amplitudenmodulation mit einem Modulationsgrad von 50 % ausgelegt sein sollte, wird die eine Leitung beispielsweise zwischen +10 V und +7,5 V umgeschaltet, während die andere Leitung synchron hierzu zwischen 0 V und +2,5 V geschaltet wird. Der Empfänger sieht damit Differenzspannungsschwankungen von 10 V und 5 V zwischen den beiden Busleitungen. Bei einem solchen System ist vorzugsweise weiter vorgesehen, daß dann, wenn einer der beiden Leitungstreiber wegen Kurzschluß der zugehörigen Busleitung abgeschaltet werden muß, der Treiber der anderen, intakten Busleitung vorzugsweise so umgeschaltet wird, daß er nun doppelten Spannungshub erzeugt. Wenn beispielsweise die +10 V Busleitung gegen Masse kurzgeschlossen ist, wird nicht nur die andere Busleitung von bislang 0 V nun auf +10 V umgeschaltet, sondern auch der Treiber so ausgesteuert, daß er eine Amplitudenmodulation zwischen +10 V und +5 V ausführt. Der Empfänger empfängt damit denselben Amplitudenmodulationsgrad wie im ungestörten Fall. Damit ist die Datenübertragungssicherheit noch weiter verbessert. Diese Verdopplung des Amplitudenhubs des einen Treibers nach Stillsetzung des Treibers der anderen Busleitung kann auch in einem Fall vorgesehen sein, bei dem keine vorhergehende Potentialumschaltung der Busleitungspotentiale erfolgt ist. Dies kann der Fall sein, wenn zum Beispiel die bislang bei dem Sollpotential von 0 V betriebene Busleitung einen dauerhaften Kurzschluß gegen Masse erfahren sollte. In einem solchen Fall unterbleibt selbstverständlich die Potentialumschaltung, es wird aber vorzugsweise dennoch der Treiber der auf hohem Pegel liegenden, anderen Busleitung hinsichtlich seines Amplitudenhubs verdoppelt.

Das beschriebene Datenübertragungssystem kann allgemein zur Datenübertragung beliebiger Art von Daten und in beliebigen Systemen zum Einsatz kommen, findet bevorzugt aber im Kraftfahrzeugsektor Verwendung, beispielsweise in einem Kraftfahrzeug-Insassenschutzsystem zur Übertragung von Daten zwischen einem zentralen Steuergerät und Sensoren und/oder Zündpillentreiberschaltungen, oder in einem Wegfahrsperren-Steuersystem oder ähnlichem.

Die Erfindung wird nachstehend anhand eines Ausführungsbeispiels unter Bezugnahme auf die Zeichnungen näher beschrieben. Es zeigen:
- Fig. 1: ein schematisches Blockschaltbild eines Ausführungsbeispiels des Datenübertragungssystems,
- Fig. 2: ein Ablaufdiagramm zur Veranschaulichung der Arbeitsweise des Datenübertragungssystems, und
- Fig. 3: auf den beiden Busleitungen auftretende Signalverläufe.

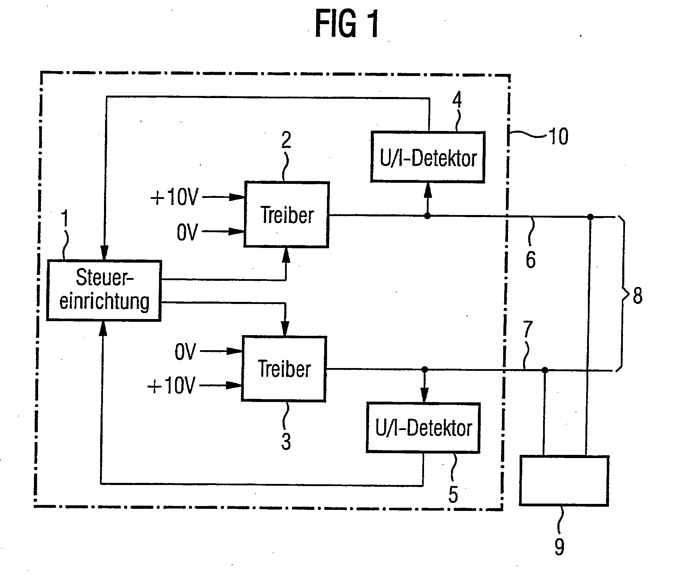

Das in Fig. 1 gezeigte Ausführungsbeispiel enthält ein Steuergerät 10, das beispielsweise das zentrale Steuergerät eines Kraftfahrzeug-Insassenschutzsystems sein kann und eine Steuereinrichtung 1 und zwei von dieser gesteuerte Bustreiber 2, 3 umfaßt. Jeder Treiber 2 und 3 ist für eine der Leitungen 6, 7 eines Zweidraht-Busses 8 vorgesehen und steuert das Potential auf der zugehörigen Leitung 6, 7 zur Datenübertragung und gegebenenfalls auch zur Gleichstromversorgung einer weiteren Datenübertragungs- oder Datenverarbeitungseinheit 9, die über zwei Leitungen oder Anschlüsse an die beiden Leitungen 6, 7 des Busses 8 angeschlossen ist. Mit der Leitung 6 ist ein Detektor 4 (U/I-Detektor) verbunden, der das Potential der Leitung 6 und/oder den auf dieser fließenden Strom erfaßt. In gleichartiger Weise ist ein Detektor 5 (U/I-Detektor) mit der Leitung 7 zur Erfassung von deren Potential und /oder Stromfluß. Die Ausgänge der Detektoren 4 und 5 sind über Leitungen an Eingänge der Steuereinrichtung 1 angelegt, so daß diese die Spannung und/oder den Strom der Leitungen 6 und 7 überwachen kann.

Im einfachsten Fall sind die Detektoren 4 und 5 als bloße Kurzschlußstromdetektoren ausgebildet, die den aktuell fließenden Strom mit einem einen Kurzschluß signalisierenden Referenzwert vergleichen und bei Erreichen oder Überschreiten des Referenzwerts ein den Überstrom signalisierendes Signal an die Steuereinrichtung 1 anlegen. Hierdurch wird die Steuereinrichtung 1 stark entlastet, da sie keine eigene Stromauswertung durchführen muß. Vorzugsweise erfassen die Detektoren 4 und 5 aber noch zusätzlich den aktuellen Potentialwert der Leitungen 6 und 7, so daß die Steuereinrichtung 1 das Auftreten von Kurzschlüssen auch aufgrund von unerwarteten Potentialänderungen detektieren kann. Im ungestörten Fall legt der Treiber 2 die Leitung 6 zumindest während der Datenübertragung, gegebenenfalls aber auch dauerhaft während des eingeschalteten Betriebszustands, auf hohen Potentialwert von beispielsweise +10 V. Der Treiber 2 legt die Leitung 7 im ungestörten Fall normalerweise auf einen von dem Potential der Leitung 6 abweichenden Potentialwert, beispielsweise 0 V, so daß auf dem Bus eine Differenzspannung von 10 V anliegt. Zur Datenübertragung wird diese Differenzspannung moduliert. Hierzu schaltet der Treiber 2 das Potential der Leitung 6 im Rhythmus der zu übertragenden Nullen und Einsen und abhängig von der gewählten Kodierungsart zwischen dem normalen Potential +10 V und einem geringeren Potentialwert von beispielsweise +7,5 V um. Symmetrisch und synchron hierzu variiert auch der Treiber 3 das Potential der Leitung 7 zwischen den Potentialwerten 0 und +2,5 V. Die Differenzspannung wird somit zwischen +5 V und +10 V im Rhythmus der zu übertragenden Daten umgeschaltet. Diese Differenzspannungswechsel werden von der Datenverarbeitungseinheit 9 erfaßt und ausgewertet. In der Regel sind noch weitere Datenverarbeitungseinheiten an den Bus 8 angeschlossen, wobei diese dann über ihre Adresse selektiert werden. Bei bidirektionaler Kommunikation ist auch die Datenverarbeitungseinheit 9 mit Treibern zur Modulation der Busspannung versehen, wobei das Steuergerät 10 dann mit einer entsprechenden, mit den Leitungen 6 und 7 verbundenen Auswerteschaltung ausgestattet ist.

Wie aus Fig. 1 ersichtlich ist, sind an die beiden Treiber jeweils die Eingangsspannungen +10 V und 0 V (bzw. andere geeignete Werte) angelegt, so daß der Treiber 2 im Störungsfall von dem Sollpotential 10 V auf 0 V umschalten kann und in gleicher Weise der Treiber 3 vom Sollpotential 0 V auf das Sollpotential 10 V wechseln kann. Damit läßt sich die Spannungspolarität der Spannung auf den Leitungen 6 und 7 umschalten. Nach einer solchen Umschaltung moduliert der Treiber 2 zur Datenübertragung dann die Leitung 6 zwischen Potentialwerten 0 V und +2,5 V, während der Treiber 3 die Leitung 7 einer Amplitudenmodulation zwischen +10 V und +7,5 V unterzieht. Die auf dem Bus auftretende Differenzspannung wird daher selbst nach einer solchen Umschaltung weiterhin zwischen 5 V und 10 V moduliert, mit dem einzigen Unterschied, daß nun die Leitung 7 positiver ist als die Leitung 6. Diese Umschaltung findet nach Erfassen bestimmter Arten von Kurzschlüssen statt, was im folgenden noch näher erläutert wird. Anstelle der eingangsseitigen Speisung der Treiber 2 und 3 jeweils mit den Sollwerten +10 V und 0 V kann alternativ auch vorgesehen sein, daß im Kurzschlußfall nur die Verbindungen der Treiber 2 und 3 mit den Leitungen 6 und 7 umgeschaltet wird, so daß der Treiber 2 dann die Leitung 7 zwischen +10 V und +7,5 V moduliert, wohingegen der Treiber 3 mit der Leitung 6 verbunden ist und diese zwischen 0 V und +2,5 V moduliert. In diesem Fall kann die Speisung des Treibers 2 mit "0 V" ebenso entfallen wie diejenige des Treibers 3 mit "+10 V".

Alternativ können die beiden Treiber 2 und 3 auch jeweils mit zwei separaten Treiberabschnitten für +10 V und 0 V versehen sein, von denen jeweils nur einer aktiviert wird, wobei die Steuereinrichtung 1 über ihre mit den Treibern 2 und 3 verbundenen Steuerleitungen die Umschaltung zwischen den beiden Treiberabschnitten bestimmt. In diesem Fall sind tatsächlich vier Treiber vorhanden, von denen nur jeweils zwei, oder aber gegebenenfalls auch nur einer bei Vollabschaltung der Treiber für die andere Busleitung, aktiv sind. Die vorstehend angebenenen Spannungswerte 0 V, 2,5 V, 7,5 V und 10 V sind lediglich Beispiele und können je nach den aktuellen Verhältnissen auch andere Werte aufweisen.

Ferner ist es auch möglich, zur Datenübertragung die Spannungsamplitude nur auf einer Busleitung, beispielsweise der Leitung 6, zu modulieren. Nach Erfassung eines Kurzschlusses der Busleitung 6 kann dann auf die Modulation der anderen Leitung 7 umgeschaltet werden, so daß die Datenübertragung dennoch fortgesetzt werden kann.

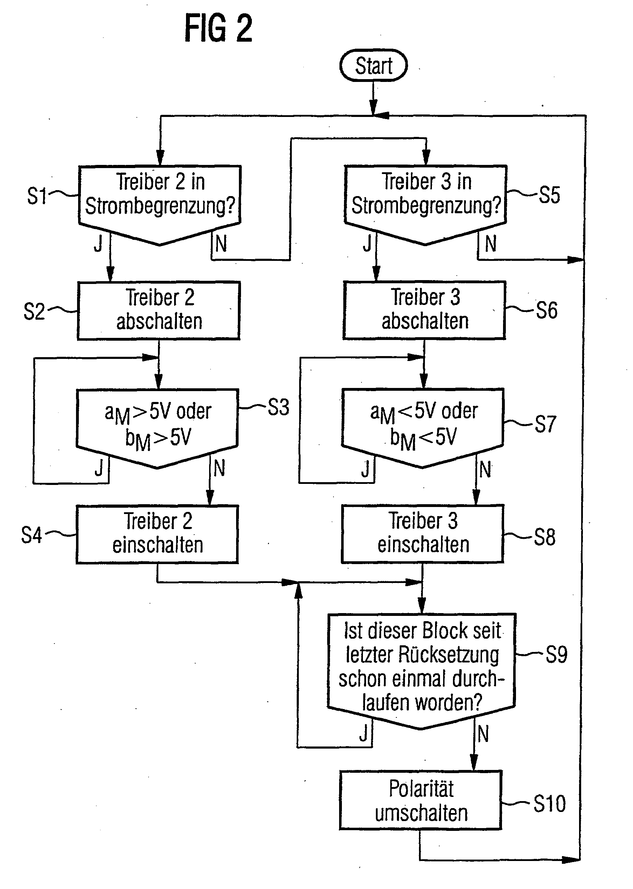

Unter Bezugnahme auf Fig. 2 wird nachfolgend die Verfahrensweise des Datenübertragungssystems beschrieben. Nach Start der Programmroutine wird bei einem Schritt S1 überprüft, ob der Treiber 2 in der Strombegrenzung arbeitet, d.h. ein Kurzschlußstrom fließt. Dies wird durch den Detektor 4 erfaßt, der an die Steuereinrichtung 1 eine entsprechende Meldung abgibt. Gegebenenfalls kann die Kurzschlußstromerfassung auch direkt in der Steuereinrichtung 1 erfolgen. Beispielsweise kann die Strombegrenzung auf 150 mA eingestellt sein, während der maximale Stromfluß bei korrekt arbeitendem System nicht über beispielsweise 100 mA ansteigt. Ein stärkerer Stromfluß als dieser Wert ist damit ein Zeichen für einen Kurzschluß der Leitung 6 gegen ein anderes Potential, das z.B. das Massepotential des Fahrzeug-Chassis sein kann. Es sind aber auch Kurzschlüsse gegen auf anderem Potential liegenden Komponenten, beispielsweise Leitungen möglich. Wenn sich der Treiber 2 in der Strombegrenzung befindet, wird er bei einem Schritt S2 abgeschaltet, so daß das Potential der Leitung 6 im ungestörten Fall auf 0 V absinkt. Anschließend überprüft die Steuereinrichtung 1 bei einem Schritt S3, ob die Spannung aM der Leitung 6 größer als 5 V, d.h. größer als die Hälfte der normalen Spannungsdifferenz zwischen den Leitungen 6 und 7, ist. Zusätzlich wird auch das Potential b_{M} der Leitung 7 überprüft, ob es größer als 5 V ist. Letztere Überprüfung wird durchgeführt, damit entschieden werden kann, ob sich ein Polaritätswechsel der Busleitungen lohnt oder nicht. Wenn das Potential b_{M} der Leitung 7 nämlich ebenfalls über 5 V liegen sollte, führt eine Polaritätsumschaltung zu keiner oder keiner nennenswerten Verbesserung der Gesamtsituation. Wenn die Potentiale aM und/oder b_{M} größer als 5 V sein sollten, wird der Schritt S3 zyklisch durchlaufen, so daß der Treiber 2 abgeschaltet bleibt. Wenn die Antwort beim Schritt S3 jedoch NEIN lautet, wird zum Schritt S4 übergegangen, bei dem der Treiber 2 wieder eingeschaltet wird und anschließend zu einem Schritt S9 übergegangen wird, bei dem überprüft wird, ob dieser Block seit der letzten, beispielsweise manuell oder bei der Einschaltung des Systems vorgenommenen Rücksetzung schon einmal durchlaufen worden ist. Ist dies der Fall, wird der Schritt S9 wiederholt durchlaufen, so daß sich das System im Wartezustand befindet. Dieser Schritt S9 dient dazu, einen zyklischen Polaritätswechsel gemäß der nachstehenden Erläuterung zu verhindern, wenn das Kurzschlußproblem durch den Polaritätswechsel nicht lösbar ist. Gegebenenfalls kann der Schritt S9 aber auch entfallen, so daß nach dem Schritt S4 dann direkt auf den Schritt S10 übergegangen wird. Lautet die Antwort im Schritt S9 "NEIN", wird bei dem Schritt S10 die Polarität des Busses 8 umgeschaltet, d.h. die Sollpotentialwerte der Leitungen 6 und 7 werden vertauscht. Der Treiber 2 wird hierbei durch die Steuereinrichtung 1 so umgeschaltet, daß er an die Busleitung 6 das Potential 0 V anlegt, das bei zu übertragenden Daten dann zwischen 0 V und +2,5 V umgeschaltet wird. Umgekehrt wird der Treiber 3 durch die Steuereinrichtung 1 so umgeschaltet, daß er die Leitung 7 nun auf das Sollpotential +10 V, gegebenenfalls amplitudenmoduliert bis auf +7,5 V, umschaltet. Nach der Polaritätsumschaltung des Busses 8 wird wieder zum Schritt S1 zurückgesprungen und erneut überprüft, ob sich der Treiber 2 noch in der Strombegrenzung befindet oder nicht. Lautet die Antwort des Schritts S1 "NEIN", wird zum Schritt S5 übergegangen, bei dem nun der Treiber 3 auf Kurzschluß der zugehörigen Busleitung 7 überprüft wird. Hierzu wird der auf der Leitung 7 fließende Strom durch den Detektor 5 abgefragt und der Steuereinrichtung 1 das entsprechende Ergebnis oder der aktuell gemessene Stromwert gemeldet. Liegt kein Kurzschluß vor, d.h. arbeitet der Treiber 3 nicht in der Strombegrenzung, wird wieder zum Schritt S1 übergegangen, so daß die Schritte S1 und S5 zyklisch durchlaufen werden.

Befindet sich demgegenüber der Treiber 3 jedoch in der Strombegrenzung, wird zum Schritt S6 übergegangen, bei dem der Treiber 3 abgeschaltet wird. Danach wird beim Schritt S7 überprüft, ob das Potential aM der Leitung 6 und/oder das Potential b_{M} der Leitung 7 jeweils unter 5 V liegt. Dies wird durch Abfrage der Spannungen auf den Leitungen 6 und 7 mittels der Detektoren 4 und 5 und Meldung an die Steuereinrichtung 1, oder durch direkte Potentialmessung seitens der Steuereinrichtung 1, bewerkstelligt, in gleicher Weise wie beim Schritt S3. Liegen ein oder beide Potentiale a_{M} oder b_{M} unter 5 V, durchläuft das System den Schritt S7 in einer Warteschleife, so daß der Treiber 3 abgeschaltet bleibt, da ein Polaritätswechsel keine Verbesserung der Situation verspricht. Wenn jedoch die Antwort beim Schritt S7 NEIN lautet, wird der Treiber 3 beim Schritt S8 wieder eingeschaltet und dann der Block S9 durchlaufen. Wenn vom Schritt S1 direkt zum Schritt S5 ohne vorherigen Polaritätswechsel übergegangen worden ist, wird dann vom Schritt S9 auf den Schritt S10 übergegangen, d.h. die Buspolarität umgeschaltet.

Das System ist damit im Stande, auf Kurzschlüsse einer der Busleitungen 6 und 7 je nach Kurzschlußtyp, d.h. potentialabhängig in unterschiedlicher Weise zu reagieren, nämlich mit Polaritätsumschaltung der Busleitung und/oder Abschaltung eines der Treiber 2 oder 3. Dies wird im folgenden zusammengefaßt. Wenn die für einen Sollpegel von 10 V vorgesehene Leitung 6 gegen eine Spannung zwischen 5 V und 10 V kurzgeschlossen ist, wird der Treiber 2 beim Schritt S3 abgeschaltet und bleibt dann abgeschaltet. Wenn die Leitung 6 gegen eine Spannung zwischen 0 V und 5 V kurzgeschlossen ist, wird die Polarität bei dem Schritt S10 umgeschaltet und dann bei dem Schritt S6, S7 der Treiber 3 abgeschaltet und abgeschaltet gehalten. Ist die Leitung 6 gegen Masse kurzgeschlossen, wird die Polarität beim Schritt S10 umgeschaltet, wonach das System dann wieder eine korrekte Datenübertragung ausführen kann und damit die Treiber 2 und 3 eingeschaltet bleiben.

Wenn die Leitung 7 gegen eine Spannung von mehr als 10 V kurzgeschlossen werden sollte, wird die Polarität beim Schritt S10 umgeschaltet. Ist die Leitung 7 gegen eine Spannung zwischen 5 V und 10 V kurzgeschlossen, wird die Polarität umgeschaltet und dann der Treiber 2 abgeschaltet (zuvor wurde der Treiber 3 beim Schritt S5 abgeschaltet und dann beim Schritt S8 wieder eingeschaltet und bleibt dann eingeschaltet). Ist die Leitung 7 gegen eine Spannung < 5 V kurzgeschlossen, wird der Treiber 3 abgeschaltet und bleibt dann abgeschaltet. Vorstehend wurde "harte" Kurzschlüsse gegen feste Potentiale diskutiert. Das System kann aber auch auf "weiche" Kurzschlüsse reagieren, bei denen lediglich zu hoher Strom fließt, ohne daß aber die Potentiale der Leitungen 6 und 7 von ihren Sollwerten stark abweichen. Wenn die Leitung 6 einen Leckfluß gegen Masse haben sollte, der beispielsweise einen Wert von 150 mA erreicht, gelangt der Treiber 2 in die Stromsättigung, was über den Detektor 4 und die Steuereinrichtung 1 erfaßt wird und zur Umschaltung der Polarität (Schritt S10) führt. In gleicher Weise findet eine Umschaltung der Polarität statt, wenn die Leitung 7 einen Leckfluß gegen die Batteriespannung oder eine sonstige hohe Spannung aufweisen sollte.

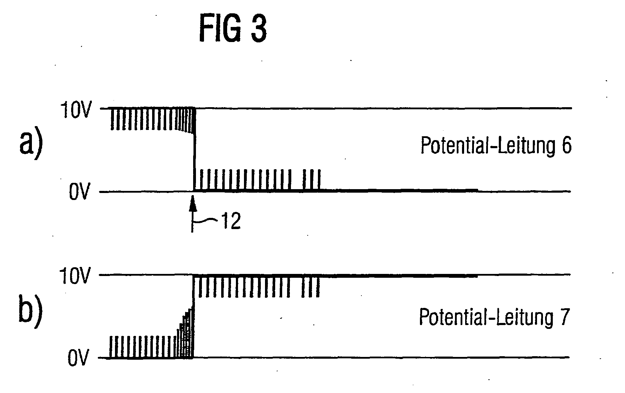

In Fig. 3 ist der Verlauf der Potentiale der Leitungen 6 und 7 dargestellt. Die Leitung 6 liegt vor einem Zeitpunkt 12 auf hohem Potential von 10 V, wobei die spikeförmigen Spitzen die zur Datenübertragung vorgenommene Amplitudenmodulation zwischen 10 V und 7,5 V veranschaulichen. Wie in Fig. 3 (Kurvenzug b) gezeigt ist, liegt das Potential der Leitung 7 bei 0 V und wird synchron und symmetrisch zu dem Potential der Leitung 6 amplitudenmoduliert (zwischen 0 V und 2,5 V). Kurz vor dem Zeitpunkt 12 wird die Leitung 7 jedoch gegen ein Potential zwischen 5 V und 10 V kurzgeschlossen. Dies führt zu einer Überlastung des Treibers 3 und damit nach Durchlaufen der Schritte S5 bis S9 zu einer Polaritätsumschaltung zum Zeitpunkt 12. Nach dem Zeitpunkt 12 wird somit die Datenübertragung mit umgekehrter Buspolarität ausgeführt. Sofern auf der Leitung 7 aufgrund des Kurzschlusses keine korrekte Amplitudenmodulation mehr möglich sein sollte, erfolgt dennoch über die Leitung 6 eine Amplitudenmodulation und damit die Sicherstellung korrekter Datenübertragung. Die Steuereinrichtung 1 kann auch so ausgelegt sein, daß sie nach Feststellung eines Leitungskurzschlusses und damit Ausfall dieser Leitung für die Amplitudenmodulation den Treiber der anderen, ungestörten Leitung (gegebenenfalls nach Polaritätsumkehrung) so ansteuert, daß dieser einen doppelt so großen Amplitudenhub von beispielsweise 5 V erzeugt, so daß empfängerseitig dieselbe Differenzspannungsänderung wie im kurzschlußfreien Fall dedektiert wird.

## Patentansprüche

1. Datenübertragungssystem mit wenigstens zwei Datenverarbeitungseinheiten (9, 10), die über einen zwei Leitungen (6, 7) aufweisenden Bus (8) miteinander verbunden sind, wobei die beiden Leitungen (6, 7) zumindest bei der Datenübertragung mit unterschiedlichen Sollpotentialen beaufschlagt sind, mit einer Steuereinrichtung (1), welche derart ausgebildet ist, dass sie die Daten erzeugt und als Modulationssignale auf mindestens eines der Sollpotentiale aufmoduliert, mit mindestens einem, mit den Leitungen (6, 7) verbundenen Treiber (2, 3) und mit einer Kurzschlussdetektoreinrichtung (1, 4, 5), welche derart ausgebildet ist, dass sie einen Kurzschluss einer der Leitungen (6, 7) erfasst, **dadurch gekennzeichnet, dass** die Kurzschlussdetektoreinrichtung (1, 4, 5) derart ausgebildet ist, dass sie abhängig vom Erfassen eines Kurzschlusses die nicht kurzgeschlossene Leitung mit dem ursprünglich für die kurzgeschlossene Leitung vorgesehenen Sollpotential beaufschlagt.

2. Datenübertragungssystem nach Anspruch 1, **dadurch gekennzeichnet, dass** die Kurzschlussdetektoreinrichtung (1, 4, 5) derart ausgebildet ist, dass sie abhängig vom Erfassen eines Kurzschlusses die Sollpotentiale der Leitungen miteinander vertauscht.

3. Datenübertragungssystem nach Anspruch 1 oder 2, **dadurch gekennzeichnet, dass** die Kurzschlussdetektoreinrichtung (1, 4, 5) derart ausgebildet ist, dass sie abhängig vom Erfassen eines Kurzschlusses den der kurzgeschlossenen Leitung zugeordneten Treiber abschaltet.

4. Datenübertragungssystem mit wenigstens zwei Datenverarbeitungseinheiten (9, 10), die über einen zwei Leitungen (6, 7) aufweisenden Bus (8) miteinander verbunden sind, wobei die beiden Leitungen (6, 7) zumindest bei der Datenübertragung mit unterschiedlichen Sollpotentialen beaufschlagt sind, mit einer Steuereinrichtung (1), welche derart ausgebildet ist, dass sie Daten erzeugt und als Modulationssignale auf die Sollpotentiale aufmoduliert, mit mindestens einem, mit den Leitungen (6, 7) verbundenen Treiber (2, 3) und mit einer Kurzschlussdetektoreinrichtung (1, 4, 5), welche derart ausgebildet ist, dass sie einen Kurzschluss einer der Leitungen (6, 7) erfasst, **dadurch gekennzeichnet, dass** die Kurzschlussdetektoreinrichtung (1, 4, 5) derart ausgebildet ist, dass sie abhängig vom Erfassen eines Kurzschlusses den Hub der Modulationssignale auf der nicht kurzgeschlossenen Leitung vergrößert.

5. Datenübertragungssystem nach Anspruch 4, **dadurch gekennzeichnet, dass** die Steuereinrichtung (1) derart ausgebildet ist, dass sie nach kurzschlussbedingter Abschaltung eines der Treiber (2, 3) den anderen Treiber derart steuert, dass dieser der ihm zugeordneten Leitung zur Datenübertragung einen doppelt so großen Hub der Modulationssignale wie im ungestörten Fall aufprägt.

6. Datenübertragungssystem mit wenigstens zwei Datenverarbeitungseinheiten (9, 10), die über einen zwei Leitungen (6, 7) aufweisenden Bus (8) miteinander verbunden sind, wobei die beiden Leitungen (6, 7) zumindest bei der Datenübertragung mit unterschiedlichen Sollpotentialen beaufschlagt sind und die durch eine Steuereinrichtung (1) erzeugten Daten als Modulationssignale nur auf eines der Sollpotentiale aufmoduliert werden, mit mindestens einem, mit den Leitungen (6, 7) verbundenen Treiber (2, 3) und mit einer Kurzschlussdetektoreinrichtung (1, 4, 5), welche derart ausgebildet ist, dass sie die einen Kurzschluss einer der Leitungen (6, 7) erfasst, **dadurch gekennzeichnet, dass** die Kurzschlussdetektoreinrichtung (1, 4, 5) derart ausgebildet ist, dass sie abhängig vom Erfassen eines Kurzschlusses der die Modulationssignale übertragenden Leitung Modulationssignale auf das Sollpotential der anderen Leitung aufmoduliert.

7. Datenübertragungssystem nach einem der Ansprüche 1 bis 5, **dadurch gekennzeichnet, dass** eine Leitungsspannungsdetektoreinrichtung (4, 5) vorgesehen ist, welche derart ausgebildet ist, dass sie das Leitungspotential der Leitungen überprüft, wobei die Steuereinrichtung (1) derart ausgebildet ist, dass sie die Umschaltung der Potentiale und/oder die Abschaltung des oder der Treiber (2, 3) leitungsspannungsabhängig steuert.

8. Datenübertragungssystem nach einem der Ansprüche 1 bis 5 oder 7, **dadurch gekennzeichnet, dass** jede Leitung (6, 7) mit einem eigenen Treiber (2, 3) versehen ist, die im ungestörten Fall synchron arbeiten und jeweils die Hälfte des Amplitudenmodulationshubs bereitstellen.

9. Datenübertragungssystem nach einem der vorhergehenden Ansprüche, **dadurch gekennzeichnet, dass** die Datenverarbeitungseinrichtung derart ausgebildet ist, dass sie zur Datenerfassung die Spannungsdifferenz zwischen den beiden Leitungen (6, 7) auswertet.

10. Datenübertragungsverfahren für ein Datenübertragungssystem mit mindestens zwei, über einen zwei Leitungen (6, 7) aufweisenden Bus (8) miteinander gekoppelten Datenverarbeitungseinheiten (9, 10),
bei dem die beiden Leitungen (6, 7) zumindest bei der Datenübertragung mit unterschiedlichen Sollpotentialen beaufschlagt sind,
bei dem die Leitungen (6, 7) hinsichtlich des Auftretens eines Kurzschlusses überprüft werden, **dadurch gekennzeichnet, dass** bei einem Kurzschluss die nicht kurzgeschlossene Leitung mit dem ursprünglich für die kurzgeschlossene Leitung vorgesehenen Sollpotential beaufschlagt wird.

11. Datenübertragungsverfahren nach Anspruch 10, bei dem bei einem Kurzschluss die Sollpotentiale der Leitungen miteinander vertauscht werden.

12. Datenübertragungsverfahren nach Anspruch 10 oder Anspruch 11, bei dem bei einem Kurzschluss ein der kurzgeschlossenen Leitung zugeordnete Treiber abgeschaltet wird.

13. Datenübertragungsverfahren nach einem der Ansprüche 10 bis 12, bei dem zur Erfassung eines Kurzschlusses überprüft wird, ob einer der Treiber (2, 3) in der Strombegrenzung arbeitet, und, wenn dies der Fall ist, dieser Treiber abgeschaltet wird und danach das auf der ihm zugeordneten Leitung (6, 7) vorhandene Potential und gegebenenfalls auch das Potential der anderen Leitung, überprüft wird.

14. Datenübertragungsverfahren nach Anspruch 13, bei dem der abgeschaltete Treiber abgeschaltet bleibt, wenn das Potential der diesem Treiber zugeordneten Leitung oder der anderen Leitung um weniger als einen bestimmten Wert von dem Sollpotential der jeweiligen Leitung abweicht.

15. Datenübertragungsverfahren nach einem der Ansprüche 11 bis 14,
bei dem nach einmaliger Umschaltung der Polarität des Busses (8) und weiterhin auftretenden Kurzschlussstrom ein nochmaliges Umschalten der Polarität verhindert wird.

16. Verfahren nach einem der Ansprüche 12 bis 15,
bei dem nach Abschalten eines Treibers der noch arbeitende Treiber zur Erzeugung eines doppelt so großen Spannungsänderungshubs wie im ungestörten Fall gesteuert wird.

17. Datenübertragungsverfahren für ein Datenübertragungssystem mit mindestens zwei, über einen zwei Leitungen (6, 7) aufweisenden Bus (8) miteinander gekoppelten Datenverarbeitungseinheiten (9, 10),
bei dem die beiden Leitungen (6, 7) zumindest bei der Datenübertragung mit unterschiedlichen Sollpotentialen beaufschlagt sind,
bei dem Modulationssignale auf die Sollpotentiale aufmoduliert werden,
bei dem die Leitungen (6, 7) hinsichtlich des Auftretens eines Kurzschlusses überprüft werden, **dadurch gekennzeichnet, dass** bei einem Kurzschluss der Hub der Modulationssignale auf der nicht kurzgeschlossenen Leitung vergrößert wird.

18. Datenübertragungsverfahren nach Anspruch 17, bei dem der Hub der Modulationssignale verdoppelt wird.

19. Datenübertragungsverfahren für ein Datenübertragungssystem mit mindestens zwei, über einen zwei Leitungen (6, 7) aufweisenden Bus (8) miteinander gekoppelten Datenverarbeitungseinheiten (9, 10),
bei dem die beiden Leitungen (6, 7) zumindest bei der Datenübertragung mit unterschiedlichen Sollpotentialen beaufschlagt sind,
bei dem Modulationssignale auf nur eines der Sollpotentiale aufmoduliert werden,
bei dem die Leitungen (6, 7) hinsichtlich des Auftretens eines Kurzschlusses überprüft werden, **dadurch gekennzeichnet, dass**
bei einem Kurzschluss der die Modulationssignale übertragenden Leitung Modulationssignale auf das Sollpotential der anderen Leitung aufmoduliert werden.

## Claims

1. Data transmission system having at least two data processing units (9, 10) which are connected to one another via a bus (8) exhibiting two lines (6, 7), the two lines (6, 7) being charged at different nominal potentials at least during the data transmission, having a control device (1), which is designed in such a way that it generates the data and modulates them as modulation signals onto at least one of the nominal potentials, having at least one driver (2, 3) connected to the lines (6, 7) and having a short-circuit detector device (1, 4, 5), which is designed in such a way that it detects a short circuit on one of the lines (6, 7), **characterized in that** the short-circuit detector device (1, 4, 5) is designed in such a way that it takes detection of a short circuit as a basis for charging the unshorted line to the nominal potential originally provided for the shorted line.

2. Data transmission system according to Claim 1,
**characterized in that** the short-circuit detector device (1, 4, 5) is designed in such a way that it takes detection of a short circuit as a basis for interchanging the nominal potentials of the lines.

3. Data transmission system according to Claim 1 or 2, **characterized in that** the short-circuit detector device (1, 4, 5) is designed in such a way that it takes detection of a short circuit as a basis for switching off the driver associated with the shorted line.

4. Data transmission system having at least two data processing units (9, 10) which are connected to one another via a bus (8) exhibiting two lines (6, 7), the two lines (6, 7) being charged to different nominal potentials at least during the data transmission, having a control device (1), which is designed in such a way that it generates data and modulates them as modulation signals onto the nominal potentials, having at least one driver (2, 3) connected to the lines (6, 7), and having a short-circuit detector device (1, 4, 5), which is designed in such a way that it detects a short circuit on one of the lines (6, 7), **characterized in that** the short-circuit detector device (1, 4, 5) is designed in such a way that it takes detection of a short circuit as a basis for increasing the swing of the modulation signals on the unshorted line.

5. Data transmission system according to Claim 4, **characterized in that** the control device (1) is designed in such a way that, after a switch-off of one of the drivers (2, 3) due to a short circuit, it controls the other driver in such a way that it impresses a swing of the modulation signals of twice the amplitude of the undisturbed case on its associated line for the purpose of data transmission.

6. Data transmission system having at least two data processing units (9, 10) which are connected to one another via a bus (8) exhibiting two lines (6, 7), the two lines (6, 7) being charged at different nominal potentials at least during a data transmission and the data generated by a control device (1) being modulated as modulation signals only onto one of the nominal potentials, having at least one driver (2, 3) connected to the lines (6, 7), and having a short-circuit detector device (1, 4, 5), which is designed in such a way that it detects a short circuit on one of the lines (6, 7), **characterized in that** the short-circuit detector device (1, 4, 5) is designed in such a way that it takes detection of a short circuit on the line transmitting the modulation signals as a basis for modulating modulation signals onto the nominal potential of the other line.

7. Data transmission system according to one of Claims 1 to 5, **characterized in that** a line voltage detector device (4, 5) is provided, which is designed in such a way that it checks the line potential of the lines, the control device (1) being designed in such a way that it controls the switch-over of the potentials and/or the switching-off of the driver or drivers (2, 3) in dependence on the line voltage.

8. Data transmission system according to one of Claims 1 to 5 or 7, **characterized in that** each line (6, 7) is provided with its own driver (2, 3) which operates synchronously in the undisturbed case and in each case provides half the amplitude modulation swing.

9. Data transmission system according to one of the preceding claims, **characterized in that** the data processing device is designed in such a way that it evaluates the voltage difference between the two lines (6, 7) for data detection.

10. Data transmission method for a data transmission system having at least two data processing units (9, 10) coupled to one another via a bus (8) exhibiting two lines (6, 7), in which the two lines (6, 7) are charged at different nominal potentials at least during the data transmission, in which the lines (6, 7) are checked for the occurrence of a short circuit, **characterized in that** upon a short circuit the unshorted line is charged to the nominal potential originally provided for the shorted line.

11. Data transmission method according to Claim 10, in which a short circuit prompts the nominal potentials of the lines to be interchanged.

12. Data transmission method according to Claim 10 or Claim 11, in which a short circuit prompts a driver associated with the shorted line to be switched off.

13. Data transmission method according to one of Claims 10 to 12, in which, for detecting a short circuit, a check is made to determine whether one of the drivers (2, 3) is operating in current-limiting mode and, if this is the case, this driver is switched off and after that the potential existing on its associated line (6, 7) and possibly also the potential of the other line is checked.

14. Data transmission method according to Claim 13, in which the driver switched off remains switched off if the potential of the line associated with this driver or of the other line deviates from the nominal potential of the respective line by less than a particular value.

15. Data transmission method according to one of Claims 11 to 14,
in which, after the polarity of the bus (8) has been switched over once and the short-circuit current still occurs, another switch-over of the polarity is prevented.

16. Method according to one of Claims 12 to 15,
in which, after a driver has been switched off, the driver still operating is controlled for generating a voltage change swing of twice the magnitude of the undisturbed case.

17. Data transmission method for a data transmission system having at least two data processing units (9, 10) coupled to one another via a bus (8) exhibiting two lines (6, 7),
in which the two lines (6, 7) are charged at different nominal potentials during the data transmission,
in which modulation signals are modulated onto the nominal potentials,
in which the lines (6, 7) are checked for the occurrence of a short circuit, **characterized in that** a short circuit prompts the swing of the modulation signals on the unshorted line to be increased.

18. Data transmission method according to Claim 17, in which the swing of the modulation signals is doubled.

19. Data transmission method for a data transmission system having at least two data processing units (9, 10) coupled to one another via a bus (8) exhibiting two lines (6, 7), in which the two lines (6, 7) are charged at different nominal potentials at least during the data transmission,
in which modulation signals are modulated onto just one of the nominal potentials,
in which the lines (6, 7) are checked for the occurrence of a short circuit, **characterized in that**
a short circuit on the line transmitting the modulation signals prompts modulation signals to be modulated onto the nominal potential of the other line.

## Revendications

1. Système de transmission de données comprenant au moins deux unités de traitement de données (9, 10), qui sont reliées entre elles par un bus (8) présentant deux lignes (6, 7), les deux lignes (6, 7) étant alimentées avec différents potentiels théoriques au moins lors de la transmission de données, avec un dispositif de commande (1), lequel est conçu de telle sorte qu'il génère les données et les module sous la forme de signaux de modulation sur au moins l'un des potentiels théoriques, avec au moins un driver (2, 3) relié aux lignes (6, 7) et avec un dispositif détecteur de court-circuit (1, 4, 5) qui est réalisé de telle sorte qu'il détecte un court-circuit de l'une des lignes (6, 7), **caractérisé en ce que** le dispositif détecteur de court-circuit (1, 4, 5) est conçu de telle sorte qu'il alimente en fonction de la détection d'un court-circuit la ligne non court-circuitée avec le potentiel théorique prévu à l'origine pour la ligne court-circuitée.

2. Système de transmission de données selon la revendication 1, **caractérisé en ce que** le dispositif détecteur de court-circuit (1, 4, 5) est réalisé de telle sorte qu'il permute les potentiels théoriques des lignes entre eux en fonction de la détection d'un court-circuit.

3. Système de transmission de données selon la revendication 1 ou 2, **caractérisé en ce que** le dispositif détecteur de court-circuit (1, 4, 5) est réalisé de telle sorte qu'il déconnecte le driver attribué à la ligne court-circuitée en fonction du résultat d'un court-circuit.

4. Système de transmission de données comprenant au moins deux unités de traitement de données (9, 10), qui sont reliées entre elles au moyen d'un bus (8) présentant deux lignes (6, 7), les deux lignes (6, 7) étant alimentées avec différents potentiels théoriques au moins lors de la transmission de données, avec un dispositif de commande (1), qui est réalisé de telle sorte qu'il génère des données et les module sous la forme de signaux de modulation sur les potentiels théoriques, avec au moins un driver (2, 3) relié aux lignes (6, 7) et avec un dispositif détecteur de court-circuit (1, 4, 5), qui est réalisé de telle sorte qu'il détecte un court-circuit de l'une des lignes (6, 7), **caractérisé en ce que** le dispositif détecteur de court-circuit (1, 4, 5) est réalisé de telle sorte qu'il augmente en fonction de la détection d'un court-circuit la course des signaux de modulation sur la ligne non court-circuitée.

5. Système de transmission de données selon la revendication 4, **caractérisé en ce que** le dispositif de commande (1) est réalisé de telle sorte que, après la déconnexion due au court-circuit de l'un des drivers (2, 3), il commande l'autre driver de telle sorte que celui-ci applique à la ligne qui lui est attribuée pour la transmission de données une course deux fois plus grande pour les signaux de modulation que dans le cas non perturbé.

6. Système de transmission de données comprenant au moins deux unités de traitement de données (9, 10), qui sont reliées entre elles au moyen d'un bus (8) présentant deux lignes (6, 7), les deux lignes (6, 7) étant alimentées avec différents potentiels théoriques au moins lors de la transmission de données et les données générées par un dispositif de commande (1) étant modulées sous la forme de signaux de modulation seulement sur l'un des potentiels théoriques, comprenant au moins un driver (2, 3) relié aux lignes (6, 7) et avec un dispositif détecteur de court-circuit (1, 4, 5), qui est réalisé de telle sorte qu'il détecte un court-circuit de l'une des lignes (6, 7), **caractérisé en ce que** le dispositif détecteur de court-circuit (1, 4, 5) est réalisé de telle sorte que, en fonction de la détection d'un court-circuit de la ligne transmettant des signaux de modulation, il module des signaux de modulation sur le potentiel théorique de l'autre ligne.

7. Système de transmission de données selon l'une quelconque des revendications 1 à 5, **caractérisé en ce qu'**un dispositif détecteur de tension de ligne (4, 5) est prévu, qui est réalisé de telle sorte qu'il vérifie le potentiel de ligne des lignes, le dispositif de commande (1) étant réalisé de telle sorte qu'il commande l'inversion des potentiels et/ou la déconnexion du driver ou des drivers (2, 3) en fonction de la tension de ligne.

8. Système de transmission de données selon l'une quelconque des revendications 1 à 5 ou 7, **caractérisé en ce que** chaque ligne (6, 7) est dotée d'un driver (2, 3) propre, qui travaille de façon synchrone dans le cas non perturbé et met à disposition à chaque fois la moitié de la course de modulation d'amplitude.

9. Système de transmission de données selon l'une quelconque des revendications précédentes, **caractérisé en ce que** le dispositif de traitement de données est réalisé de telle sorte qu'il analyse pour la détection de données la différence de tension entre les deux lignes (6, 7).

10. Procédé de transmission pour un système de transmission de données avec au moins deux unités de traitement de données (9, 10) couplées entre elles au moyen d'un bus (8) présentant deux lignes (6, 7),
dans lequel les deux lignes (6, 7) sont alimentées avec différents potentiels théoriques au moins lors de la transmission de données,
dans lequel les lignes (6, 7) sont vérifiées en ce qui concerne l'apparition d'un court-circuit, **caractérisé en ce que**, lors d'un court-circuit, la ligne non court-circuitée est alimentée avec le potentiel théorique prévu au départ pour la ligne court-circuitée.

11. Procédé de transmission de données selon la revendication 10, dans lequel, lors d'un court-circuit, les potentiels théoriques des lignes sont permutés entre eux.

12. Procédé de transmission de données selon la revendication 10 ou la revendication 11, dans lequel, lors d'un court-circuit, un driver attribué à la ligne court-circuitée est déconnecté.

13. Procédé de transmission de données selon l'une quelconque des revendications 10 à 12, dans lequel, pour détecter un court-circuit, on vérifie si l'un des drivers (2, 3) travaille dans la limitation de courant et, si c'est le cas, ce driver est déconnecté et ensuite le potentiel présent sur la ligne (6, 7) qui lui est attribué et éventuellement également le potentiel de l'autre ligne est vérifié.

14. Procédé de transmission de données selon la revendication 13, dans lequel le driver déconnecté reste déconnecté lorsque le potentiel de la ligne attribuée à ce driver ou de l'autre ligne s'écarte de moins d'une valeur définie du potentiel théorique de la ligne concernée.

15. Procédé de transmission de données selon l'une quelconque des revendications 11 à 14, dans lequel, après une unique inversion de la polarité du bus (8) et un courant de court-circuit apparaissant également, une nouvelle inversion de la polarité est empêchée.

16. Procédé de transmission de données selon l'une quelconque des revendications 12 à 15, dans lequel, après la déconnexion d'un driver, le driver travaillant encore est commandé pour générer une course de modification de tension aussi grande que dans le cas non perturbé.

17. Procédé de transmission de données pour un système de transmission de données comprenant au moins deux unités de traitement de données (9, 10) couplées entre elles au moyen d'un bus (8) présentant deux lignes (6, 7),
dans lequel les deux lignes (6, 7) sont alimentées avec différents potentiels théoriques au moins lors de la transmission de données, dans lequel des signaux de modulation sont modulés sur les potentiels théoriques,
dans lequel les lignes (6, 7) sont vérifiées en ce qui concerne l'apparition d'un court-circuit, **caractérisé en ce que**, lors d'un court-circuit, la course des signaux de modulation est augmentée sur la ligne court-circuitée.

18. Procédé de transmission de données selon la revendication 17, dans lequel la course des signaux de modulation est doublée.

19. Procédé de transmission de données pour un système de transmission de données avec au moins deux unités de traitement de données (9, 10) couplées entre elles au moyen d'un bus (8) présentant deux lignes (6, 8),
dans lequel les deux lignes (6, 7) sont alimentées avec différents potentiels théoriques au moins lors de la transmission de données,
dans lequel des signaux de modulation sont modulés sur seulement l'un des potentiels théoriques,
dans lequel les lignes (6, 7) sont vérifiées en ce qui concerne l'apparition du court-circuit, **caractérisé en ce que**, lors d'un court-circuit de la ligne transmettant les signaux de modulation, des signaux de modulation sont modulés sur le potentiel théorique de l'autre ligne.
